# EUROPÄISCHE PATENTSCHRIFT

(11) **EP 0 760 301 B1**
(45) Veröffentlichungstag und Bekanntmachung des Hinweises auf die Patenterteilung: **21.07.1999**
(21) Anmeldenummer: 96109466.1
(22) Anmeldetag: 13.06.1996
(51) Int. Cl.: B60J 1/18, B60J 7/12

(54) **Faltverdeck für ein Cabriolet-Fahrzeug**
Foldable top for convertible vehicle
Capote pliante pour cabriolet

(30) Priorität: 24.08.1995 DE 29513595 U
(43) Veröffentlichungstag der Anmeldung: 05.03.1997
(73) Patentinhaber: Wilhelm Karmann GmbH, D-49084 Osnabrück (DE)
(72) Erfinder: Rothe, Karl, 49565 Bramsche (DE)
(74) Vertreter: Busse & Busse Patentanwälte

(56) Entgegenhaltungen:
- DE-C- 3 808 909
- GB-A- 466 717
- US-A- 4 784 428

## Beschreibung

Die Erfindung bezieht sich auf ein Faltverdeck für ein Cabriolet-Fahrzeug in einer Ausbildung gemäß dem Oberbegriff des Anspruches 1.

Bei bekannten Cabriolet-Fahrzeugen weist das in Schließstellung befindliche Faltverdeck in seinem heckseitig gespannten Dachhautbereich eine mit randseitigen Rahmenteilen weitgehend in die Dachhaut integrierte Heckscheibe auf. An den Rahmenteilen greifen dabei jeweils randseitig zusätzliche Halteteile in Form von Positioniergurten an, die bei der Bewegung des Faltverdecks zu einem Verdeckkasten hin bzw. aus diesem heraus gemeinsam mit einem Klappgestänge so bewegt werden, daR eine gesteuerte Ablage der Heckscheibe erreicht ist. Bei dieser für Cabriolet-Fahrzeuge typischen Faltverdeckbewegung wird der Fondbereich des Fahrzeuges zumindest in der Schwenkphase im Bereich der hinteren Sitzbank durch die über diese schwenkende Heckscheibe eingeengt und die Heckscheibe ist bei den Falt- und Schwenkbewegungen insgesamt hohen Belastungen ausgesetzt.

Der Erfindung liegt die Aufgabe zugrunde, ein Faltverdeck für ein Cabriolet-Fahrzeug zu schaffen, dessen mit dem hinteren Dachhautbereich verbundene Heckscheibe mit konstruktiv einfachen Halteteilen versehen ist, die ohne Beeinflussung der Kopffreiheit im Fondbereich des Fahrzeugs eine weiträumige Steuerung der Heckscheibenbewegung bei gleichzeitig geringen Dachhautbelastungen ermöglichen.

Die Erfindung löst diese Aufgabe durch ein Faltverdeck mit den Merkmalen des Anspruches 1. Hinsichtlich wesentlicher weiterer Ausgestaltungsmerkmale wird auf die Ansprüche 2 bis 10 verwiesen.

Die Erfindung schafft ein Faltverdeck für ein Cabriolet-Fahrzeug, dessen in den hinteren Dachhautbereich integrierte Heckscheibe, insbesondere bei deren Ausbildung als ein Mineralglasscheibe, mit den jeweils randseitig angreifenden Gelenkketten eine Stütz- und Steuereinheit aufweist, über deren im wesentlichen parallel zur Fahrzeuglängsachse zwangsbewegbare Gelenkglieder eine Über-Kopf-Steuerung des Faltverdecks bei dessen Schwenkbewegung in die Öffnungs- bzw. Schließstellung derart möglich ist, daß ein im Fondbereich befindlicher Passagier unbeeinflußt bleibt.

Die vorzugsweise vier Gelenkverbindungspunkte aufweisende Drehgelenkkette greift dabei im Bereich ihres freien Endes am Rahmen der Heckscheibe über einen Umlenkhebel als Gelenkglied derart an, daß eine in Schwenkrichtung jeweils zum Fahrzeugfondbereich weisende vordere Querkante der Heckscheibe eine in jeder Schwenkphase dem Eckspriegeloberteil folgende und insbesondere über dem Fondbereich eine als Kopffreiheit wirksame Bogenhöhe aufweisende Bahnkurve beschreibt.

Über den in der Drehgelenkkette zweiteilig ausgebildeten Eckspriegel mit dem Eckspriegeloberteil und einem unteren Gelenkglied kann der hintere Dachhautbereich mit der Heckscheibe in jeder Schwenkphase spannungsfrei bewegt werden, so daß örtliche Überbelastungen vermieden und eine schonendes Ein- bzw. Ausschwenken des Faltverdecks im Bereich des heckseitigen Verdeckkastens möglich ist.

Die Abmessungen der Gelenkglieder sind in vorteilhafter Ausbildung derart optimiert, daß der Bewegungsbahn der Heckscheibe beim Ein- bzw. Ausschwenken im Bereich des Verdeckkastens eine zusätzliche, in Fahrzeuglängsrichtung nach vorn gerichtete Führungskomponente überlagert werden kann. So kann mit geringem Aufwand eine raumsparende Positionierung des Faltverdecks in der Ablagestellung erreicht werden und auch bei beengten Platzverhältnissen ist eine ungehinderte Faltverdeckbewegung möglich.

Hinsichtlich weiterer Vorteile und Einzelheiten der Erfindung wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: eine teilweise geschnittene Perspektivdarstellung eines Faltverdecks im Bereich seines hinteren Dachhautbereiches,
- Fig. 2: eine Seitenansicht des Faltverdecks gemäß Fig. 1,
- Fig. 3: eine Seitenansicht ähnlich Fig. 2 mit dem Faltverdeck in einer Öffnungsphase,

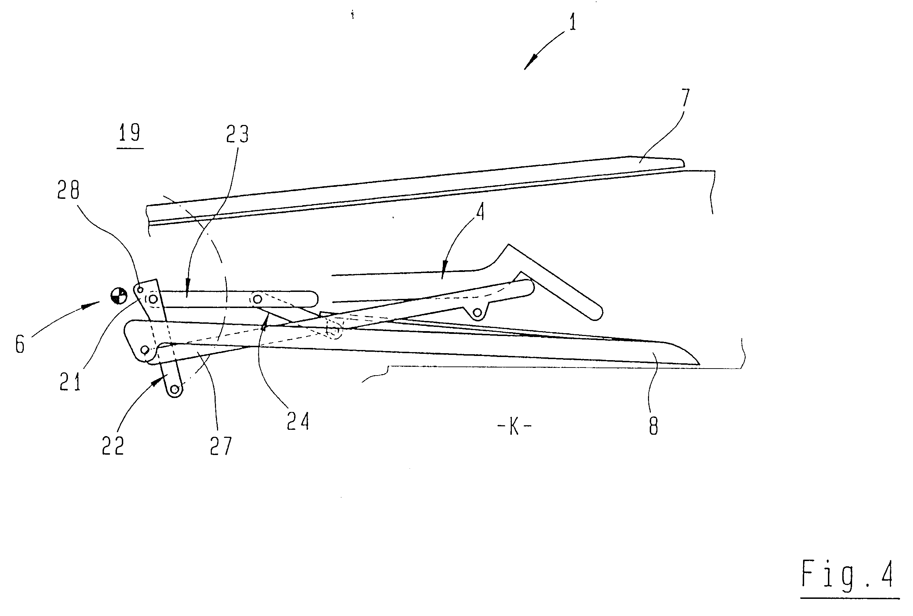

- Fig. 4: eine Seitenansicht des Faltverdecks bei dessen Ablage in einem Verdeckkasten, und
- Fig. 5: eine Seitenansicht des Faltverdecks mit mehreren Bewegungsphasen in einer Darstellung.

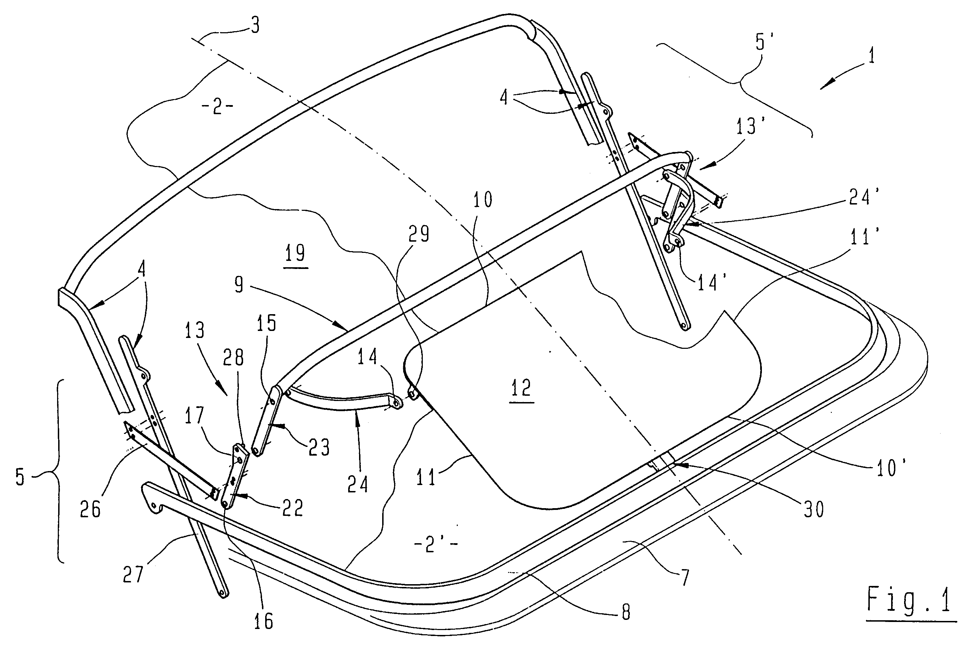

In Fig. 1 ist in einer perspektivischen Rückansicht ein insgesamt mit 1 bezeichnetes Faltverdeck für ein nicht näher dargestelltes Cabriolet-Fahrzeug veranschaulicht, wobei sich eine Dachhaut 2 zwischen beidseits der Fahrzeuglängsachse 3 symmetrisch gegenüberliegenden Gestängeschenkeln 4 eines in Schließstellung im Bereich des Windschutzscheibenrahmens (nicht dargestellt) festlegbaren Klappgestänges 5 erstreckt.

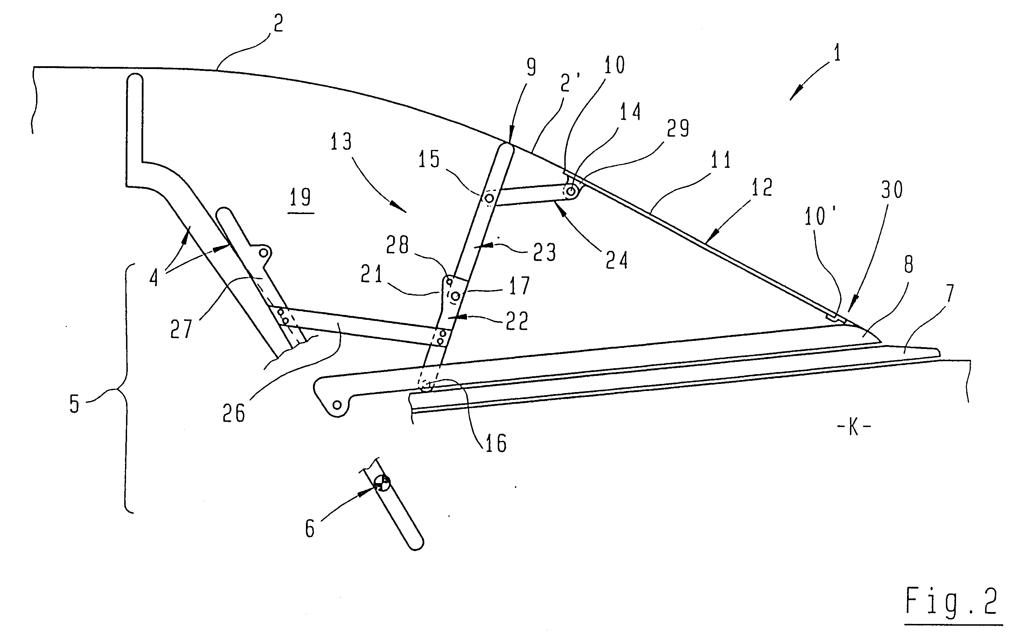

Im Fahrzeugheckbereich ist das Klappgestänge 5 im Bereich eines Hauptschwenklagers 6 (Fig. 2) karosserieseitig abgestützt und der heckseitige Dachhautbereich 2' erstreckt sich zwischen einem hinteren, in Schließstellung auf einem Verdeckkastendeckel 7 aufliegenden Spannbügel 8 und einem quer zur Fahrzeuglängsachse 3 angeordneten Eckspriegel 9. In den heckseitigen Dachhautbereich 2' ist dabei eine an ihrem Außenrandbereichen 10, 11 bzw. 10', 11' mit nicht näher dargestellten Rahmenteilen versehene Heckscheibe 12 integriert.

Das erfindungsgemäß ausgebildete Faltverdeck 1 ist im seitlichen Heckbereich des Klappgestänges 5 mit jeweilige Halteteile für die Heckscheibe 12 bildenden Drehgelenkketten 13, 13' versehen, wobei deren Gelenkglieder am Außenwandbereich 11, 11' der Heckscheibe 12, am Eckspriegel 9 und zum Hauptschwenklager 6 hin über jeweils eine Gelenkverbindung 14, 15, 16 abgestützt sind.

Die Explosivdarstellung der Einzelteile des Klappgestänges 5 in Fig. 1 verdeutlicht, daß die Drehgelenkkette 13 im Bereich des jeweils zum Hauptschwenklager 6 gerichteten Teils des Eckspriegels 9 zweigliedrig ausgebildet ist und eine weitere Gelenkverbindung 17 aufweist. Die Drehgelenkkette 13 bildet damit ein einenends im Bereich des Hauptschwenklagers 6 den Zwanglauf einleitendes unteres Gelenkglied 22 und dieses ist anderenends mit einem Eckspriegeloberteil 23 verbunden. An diesem ist ein im wesentlichen parallel zur Fahrzeuglängsachse 3 abragender sowie mit der Heckscheibe 12 im Bereich des Längsrandes 11 verbundener, in Schießstellung das obere Gelenkglied der Gelenkkette 13 bildender Umlenkhebel 24 vorgesehen (Fig. 2).

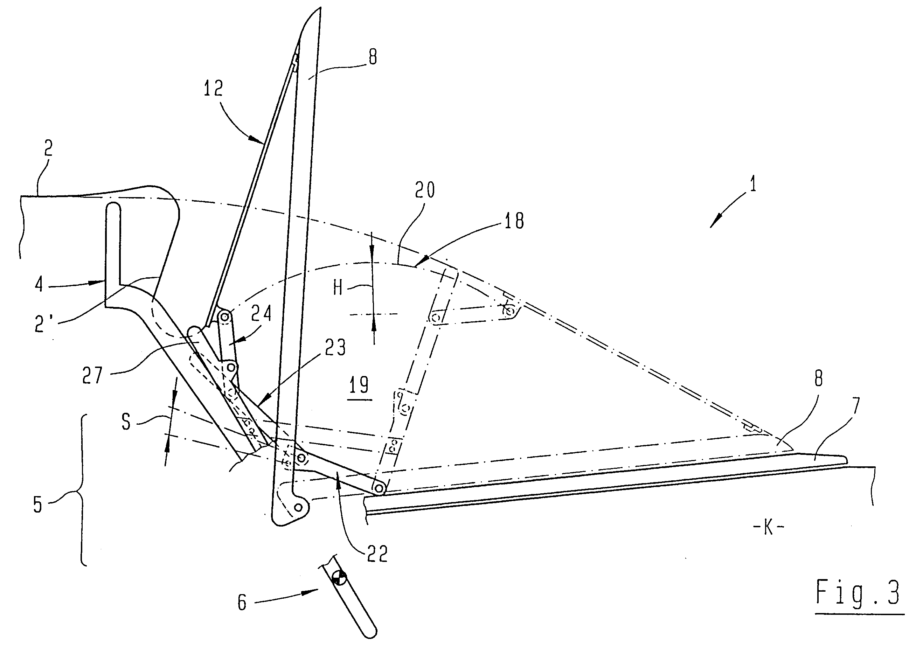

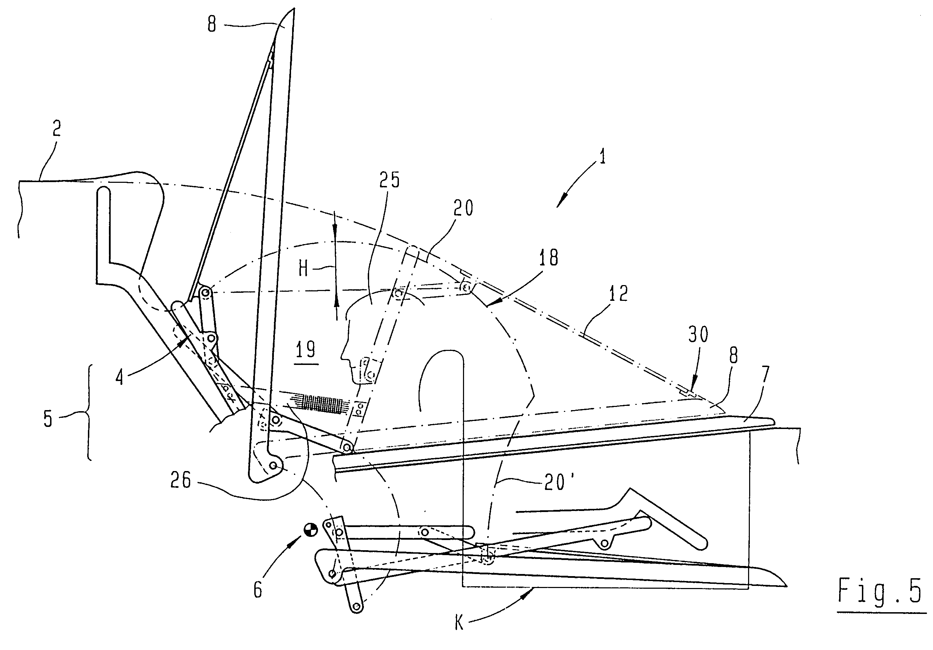

Die Darstellung des Faltverdecks 1 gemäß Fig. 2 verdeutlicht in einer Zusammenschau mit Fig. 3 bzw. Fig. 5 die unterschiedlichen Bewegungsphasen des Faltverdecks 1 und deren Bauteile im Bereich des Klappgestänges 5, wobei die Heckscheibe 12 über die Gelenkglieder 14, 15, 16 und 17 auf einer Bewegungsbahn 18 geführt ist, die zumindest über dem Fondbereich 19 des Fahrzeugs einen Bogenbereich 20 mit einer als Kopffreiheit für einen Passagier 25 wirksamen Bogenhöhe H bildet (Fig. 5). Im Bereich des Verdeckkastens K weist die Bewegungsbahn 18 einen Bogenbereich 20' auf, mit dem das Ein- bzw. Ausschwenken des` Faltverdecks 1 bzw. der Heckscheibe 12 im Bereich des Verdeckkastens deutlich wird.

Das untere Gelenkglied 22 ist in zweckmäßiger Ausführung mit einem sich in Richtung der Fahrzeuglängsachse 3 erstreckenden Spanngurt 26 versehen, der mit einer Führungsstange 27 des Klappgestänges 5 verbunden ist. Der Spanngurt 26 greift dabei im wesentlichen mittig an dem unteren Gelenkglied 22 an, so daß eine zugstabile Verbindung zwischen der Führungsstange 27 und dem Gelenkglied 22 der Gelenkkette 13 gebildet ist und diese in der Schließstellung (Fig. 2) ausgesteift ist.

Das untere Gelenkglied 22 ist außerdem im Bereich der zum Eckspriegeloberteil 23 hin gebildeten Gelenkverbindung 17 mit einer Formerweiterung 21 versehen, an der ein in diesem Gelenk-Verbindungsbereich den Schwenkweg S (Fig. 3) des Eckspriegeloberteils 23 in Fahrtrichtung begrenzender Anschlag 28 vorgesehen ist (Anlagestellung gemäß Fig. 2).

Die perspektivische Rückansicht des Faltverdecks 1 gemäß Fig. 1 verdeutlicht, daß der Umlenkhebel 24 ausgehend von der Gelenkverbindung 15 am Eckspriegeloberteil 23 eine zur Fahrzeuglängsmittelebene 3 hin gebogene, im wesentlichen der Dachkontur des Faltverdecks 1 in Schließstellung angepaßte Kontur aufweist. Im Bereich der Gelenkverbindung 14 ist der Umlenkhebel 24 über eine Schwenklasche 29 am Längsrahmenteil 11 der Heckscheibe 12 abgestützt. Ebenso ist denkbar, den Umlenkhebel 24 mehrgliedrig auszubilden (nicht dargestellt), so daß die in der dargestellten Ausführungsform mit drei Gelenkgliedern 22, 23, 24 versehene Gelenkkette 13 beispielsweise vier Gelenkglieder aufweist.

Die Darstellung gemäß Fig. 2 verdeutlicht außerdem, daß die Heckscheibe 12 im Bereich ihres hinteren Querrahmenteils 10' mit einem zum Spannbügel 8 des Faltverdecks 1 gerichteten Scharnierteil 30 versehen ist, wobei dieses in zweckmäßiger Ausführung als ein Doppelgelenkscharnier ausgebildet sein kann.

Mit diesem Scharnierteil 30 ist im Zusammenwirken mit den beiden Gelenkverbindungen 14, 14' und den Umlenkhebeln 24, 24' eine Drei-Punkt-Abstützung für die Heckscheibe 12 gebildet, so daß die Steifigkeit des Faltverdecks 1 im heckseitigen Dachhautbereich 2' insgesamt verbessert und eine drehfeste Verbindung der Heckscheibe 12 mit dem Spannbügel 8 erreicht ist.

## Patentansprüche

1. Faltverdeck für ein Cabriolet-Fahrzeug, dessen Dachhaut (2, 2') zwischen beidseits der Fahrzeuglängsachse (3) gegenüberliegenden Gestängeschenkeln (4) eines im Bereich des Windschutzscheibenrahmens festlegbaren und im Fahrzeugheckbereich karosserieseitig über gegenüberliegende Hauptschwenklager (6) abgestützten Klappgestänges (5) aufgenommen ist, wobei zwischen einem hinteren Spannbügel (8) und einem quer zur Fahrzeuglängsachse (3) angeordneten Eckspriegel (9) im heckseitigen Dachhautbereich (2') eine Heckscheibe (12) vorgesehen ist, deren Außenwandbereiche (10, 10', 11, 11') jeweils randseitig über Halteteile mit dem Klappgestänge (5) verbunden sind, **dadurch gekennzeichnet**, daß die Heckscheibe (12) mittels der Halteteile auf einer Bewegungsbahn (20) geführt ist, die über dem Fondbereich (19) des Fahrzeugs (1) einen Bogenbereich (20) mit einer als Kopffreiheit wirksamen Bogenhöhe (H)aufweist.

2. Faltvderdeck für ein Cabriolet-Fahrzeug nach Anspruch 1, dadurch gekennzeichnet, daß als Halteteil jeweils eine seitliche Drehgelenkkette (13, 13') vorgesehen ist, deren Gelenkglieder (24, 23, 22) am Heckscheibenrahmen (11, 11'), am Eckspriegel (9) und im Bereich des Hauptschwenklagers (6) über jeweils zumindest ein Verbindungsgelenk (14, 15, 16) abgestützt sind.

3. Faltverdeck für ein Cabriolet-Fahrzeug nach Anspruch 1 oder 2, dadurch gekennzeichnet, daß die Drehgelenkkette (13) im Bereich des Eckspriegels (9) zweigliedrig (22, 23) ausgebildet ist.

4. Faltverdeck für ein Cabriolet-Fahrzeug nach einem der Ansprüche 1 bis 3, dadurch gekennzeichnet, daß die Drehgelenkkette (13) ein einenends im Bereich des Hauptschwenklagers (6) den Zwanglauf einleitendes unteres Gelenkglied (22) aufweist, dieses anderenends mit einem Eckspriegeoberteil (23) verbunden ist und an diesem ein im wesentlichen parallel zur Fahrzeuglängsachse (3) abragender sowie mit der Heckscheibe (12) im Bereich des Längsaußenrandes (11, 11') verbundener Umlenkhebel (24) vorgesehen ist.

5. Faltverdeck für ein Cabriolet-Fahrzeug nach einem der Ansprüche 1 bis 4, dadurch gekennzeichnet, daß das untere Gelenkglied (22) über einen sich in Richtung der Fahrzeuglängsachse (3) erstreckenden Spanngurt (26) mit einer Führungsstange (27) des Klappgestänges (5) verbunden ist.

6. Faltverdeck für ein Cabriolet-Fahrzeug nach einem der Ansprüche 1 bis 5, dadurch gekennzeichnet, daß das untere Gelenkglied (22) im Bereich seiner Gelenkverbindung (17) mit dem Eckspriegeloberteil (23) einen dessen Schwenkweg (S) in Fahrtrichtung begrenzenden Anschlag (28) aufweist.

7. Faltverdeck für ein Cabriolet-Fahrzeug nach einem der Ansprüche 1 bis 6, dadurch gekennzeichnet, daß der Umlenkhebel (24) ausgehend von der Gelenkverbindung (15) am Eckspriegeloberteil (23) eine zur Fahrzeuglängsmittelebene (3) hin gebogene Kontur aufweist und über eine Schwenklasche (29) am Außenwandbereich (11, 11') der Heckscheibe (12) abgestützt ist.

8. Faltverdeck für ein Cabriolet-Fahrzeug nach Anspruch 7, dadurch gekennzeichnet, daß der Umlenkhebel (24) mehrgliedrig ausgebildet ist.

9. Faltverdeck für ein Cabriolet-Fahrzeug nach einem der Ansprüche 1 bis 8, dadurch gekennzeichnet, daß die Heckscheibe (12) an ihrem zum Spannbügel (8) gerichteten Querrandbereich (10') mit einem Scharnierteil (30) versehen ist.

10. Faltverdeck für ein Cabriolet-Fahrzeug nach Anspruch 9, dadurch gekennzeichnet, daß das Scharnierteil (30) als ein Doppelgelenkscharnier ausgebildet ist.

## Claims

1. A foldable top for a convertible vehicle, the roof skin (2, 2') of which is accommodated between linkage arms (4) situated opposite each other on both sides of the longitudinal axis (3) of the vehicle and which are part of a folding linkage (5) which can be fixed in the region of the windscreen frame and supported by oppositely disposed main pivot bearings (6) on the body side in the rear part of the vehicle, whereby there is between a rear stretcher bracket (8) and a corner strut (9) disposed crosswise to the longitudinal axis (3) of the vehicle a rear window (12) in the rear part (2') of the roof skin, the outer wall areas (10, 10', 11, 11') being respectively connected along their edges to the folding linkage (5) via retaining parts, characterised in that the rear window (12) is guided by means of the retaining parts on a movement path (18) which has over the bottom part (19) at the back of the vehicle (1) an arcuate portion (20) the height (H) of which provides effective head clearance.

2. A foldable top for a convertible vehicle according to claim 1, characterised in that on each side, as a retaining part, there is a swivel link chain (13, 13'), the articulating members (24, 23, 22) of which are supported on the rear window frame (11, 11'), on the corner strut (9) and in the region of the main pivot bearing (6) via in each case at least one connecting link (14, 15, 16).

3. A foldable top for a convertible vehicle according to claim 1 or 2, characterised in that in the region of the corner strut (9) the swivel link chain (13) is of twin link (22, 23) construction.

4. A foldable top for a convertible vehicle according to one of claims 1 to 3, characterised in that the swivel link chain (13) has a lower articulating member (22) which at one end initiates positive movement in the region of the main pivot bearing (6) while at its other end it is connected to an upper part (23) of the corner strut and on this latter there is substantially parallel with the longitudinal axis (3) of the vehicle a projecting deflecting lever (24) which is connected to the rear window (12) in the region of the outer long edge (11, 11').

5. A foldable top for a convertible vehicle according to one of claims 1 to 4, characterised in that the lower articulating member (22) is connected to a guide rod (27) of the folding linkage (5) via a tensioning strap (26) extending in the direction of the longitudinal axis (3) of the vehicle.

6. A foldable top for a convertible vehicle according to one of claims 1 to 5, characterised in that in the region of its articulating connection (17) to the upper part (23) of the corner strut the lower articulating member (22) has an abutment (28) which limits the pivoting movement (S) in the direction of travel.

7. A foldable top for a convertible vehicle according to one of claims 1 to 6, characterised in that starting from the articulating connection (15) on the upper part (23) of the corner strut the deflecting lever (24) has a contour curving towards the longitudinal central plane (3) through the vehicle and is supported via a pivoting lug (29) on the outer marginal area (11, 11') of the rear windscreen (12).

8. A foldable top for a convertible vehicle according to claim 7, characterised in that the deflecting lever (24) is of multi-link construction.

9. A foldable top for a convertible vehicle according to one of claims 1 to 8, characterised in that the rear windscreen (12) is provided with a hinge part (30) on its transverse marginal region (10') which is directed towards the tensioning bracket (8).

10. A foldable top for a convertible vehicle according to claim 9, characterised in that the hinge part (30) is constructed as a double-articulation hinge.

## Revendications

1. Toit pliant pour un cabriolet, dans lequel :
• la couverture de toit (2, 2') est montée entre des branches se faisant face de part et d'autre de l'axe longitudinal (3) du véhicule et appartenant à une tringlerie rabattable (5) qui peut être fixée dans la zone du cadre de pare-brise et qui, à la partie arrière du véhicule, est articulée à la carrosserie par l'intermédiaire de paliers principaux de basculement (6),
• entre un étrier de tension (5) situé à l'arrière et un arceau d'angle (9) transversal par apport au véhicule, il est prévu dans la zone arrière de la couverture de toit (2') une vitre arrière (12) dont les zones marginales (10, 10', 11, 11') sont reliées à la tringlerie rabattable (5) par des pièces de maintien,
caractérisé en ce que
la vitre arrière (12) est guidée par les pièces de maintien de manière à suivre une trajectoire (18) qui, au-dessus de la zone (19) des sièges arrière du véhicule (1) présente un arc de cercle (20) laissant aux têtes des passagers un espace de liberté de hauteur (H).

2. Toit pliant pour cabriolet selon la revendication 1,
caractérisé en ce que
la pièce de maintien, de chaque côté, est une chaîne (13, 13') à articulations de rotation composée d'organes articulés (24, 23, 22) en appui sur le cadre de vitre arrière (11, 11') sur l'arceau d'angle (9) et dans la zone du palier principal de basculement (6) respectivement au moins une articulation de liaison (14, 15, 16)

3. Toit pliant pour cabriolet selon la revendication 1 ou 2,
caractérisé en ce que
la chaîne articulée (13) est composée, dans la zone de l'arceau d'angle (9) de deux organes (22, 23).

4. Toit pliant pour un cabriolet selon une des revendications 1 à 3,
caractérisé en ce que
la chaîne articulée (13) comprend un organe articulé inférieur (22) dont une extrémité induit la trajectoire forcée dans la zone du palier principal de basculement (6) tandis que l'autre extrémité est reliée à une pièce supérieure d'arceau d'angle (23), sur laquelle est monté un levier de renvoi (24) sensiblement parallèle à l'axe longitudinal (3) du véhicule et relié à la vitre arrière (12) dans la zone d'un bord longitudinal (11, 11') de celle-ci.

5. Toit pliant pour cabriolet selon l'une des revendications 1 à 4,
caractérisé en ce que
l'organe articulé inférieur (22) est relié par une sangle de tension (26) orientée parallèlement à l'axe longitudinal (3) du véhicule, à une tringle de guidage (27) de la tringlerie rabattable (5).

6. Toit pliant pour cabriolet selon l'une des revendications 1 à 5,
caractérisé en ce que
l'organe articulé inférieur (22), dans la zone de sa liaison articulée (17) avec la pièce supérieure d'arceau (23) porte une butée (28) limitant la course de basculement (S) selon la direction de déplacement du véhicule.

7. Toit pliant pour cabriolet selon l'une des revendications 1 à 6,
caractérisé en ce que
le levier de renvoi (24), en allant de la liaison articulée (15) à la pièce supérieure d'arceau d'angle (23) est cintré en direction du plan longitudinal médian du véhicule (3) et s'appuie par l'intermédiaire d'une patte de basculement (29) sur la zone marginale (11, 11') de la vitre arrière (12).

8. Toit pliant pour cabriolet selon la revendication 7, caractérisé en ce que le levier (24) de renvoi (24) est constitué de plusieurs éléments.

9. Toit pliant pour cabriolet selon l'une des revendications 1 à 8,
caractérisé en ce que
la vitre arrière (12) est munie, sur sa zone marginale transversale (10') dirigée vers l'étrier de tension (8), d'une pièce de charnière (30).

10. Toit pliant pour cabriolet selon la revendication 9,
caractérisé en ce que
la pièce de charnière (30) est une charnière à double articulation.
